# EUROPÄISCHE PATENTSCHRIFT

(11) **EP 3 209 518 B1**
(45) Veröffentlichungstag und Bekanntmachung des Hinweises auf die Patenterteilung: **27.01.2021**
(21) Anmeldenummer: 15787942.0
(22) Anmeldetag: 23.10.2015
(51) Int. Cl.: B60L 58/19, B60L 53/62

(54) **VERFAHREN ZUM BETRIEB EINER ENERGIESPEICHEREINRICHTUNG IN EINEM KRAFTFAHRZEUG UND KRAFTFAHRZEUG**
METHOD FOR OPERATING AN ENERGY STORAGE DEVICE IN A MOTOR VEHICLE, AND MOTOR VEHICLE
PROCÉDÉ PERMETTANT DE FAIRE FONCTIONNER UN DISPOSITIF D'ACCUMULATION D'ÉNERGIE DANS UN VÉHICULE AUTOMOBILE ET VÉHICULE AUTOMOBILE

(30) Priorität: 24.10.2014 DE 102014015802; 11.11.2014 DE 102014016620
(43) Veröffentlichungstag der Anmeldung: 30.08.2017
(73) Patentinhaber: Audi AG, 85045 Ingolstadt (DE)
(72) Erfinder: MEITINGER, Karl-Heinz, 80639 München (DE); WEIN, Michael, 92358 Seubersdorf (DE); SCHÜSSLER, Martin, 85092 Kösching (DE); STAUBER, Alois, 85053 Ingolstadt (DE); HOFMANN, Reinhard, 85110 Kipfenberg (DE)
(74) Vertreter: Neuhausen, Marc-Alexander
(86) Internationale Anmeldenummer: PCT/EP2015/074579
(87) Internationale Veröffentlichungsnummer: WO 2016/062850

(56) Entgegenhaltungen:
- DE-A1-102010 041 253
- JP-A- 2013 038 910
- JP-A- 2013 081 316

## Beschreibung

Die Erfindung betrifft ein Verfahren zum Betrieb einer Energiespeichereinrichtung mit wenigstens einem ersten und wenigstens einem zweiten Energiespeicherelement in einem Kraftfahrzeug, wobei das erste und das zweite Energiespeicherelement zur Bereitstellung einer Nennspannung der Energiespeichereinrichtung in Serie geschaltet sind.

In Kraftfahrzeugen werden Batterien zum Betrieb einer Vielzahl von Fahrzeugsystemen genutzt. Zunehmend werden wiederaufladbare Energiespeicher auch genutzt um Antriebssysteme von Kraftfahrzeugen zu betreiben, beispielsweise in Hybrid- oder reinen Elektrofahrzeugen. Dabei ist bei vielen dieser Fahrzeugtypen vorgesehen, eine Batterie aus einem Stromnetz zu laden, um einen rein elektrischen Betrieb von Antrieben zu ermöglichen. Zum Laden dieser Batterien werden insbesondere Gleichstromladegeräte genutzt, die einen Gleichstrom zum Laden der Batterie mit einer vorgegebenen Spannung bereitstellen. Die Spannung kann typischerweise in einem vorgegebenen Bereich variiert werden, um Fahrzeugbatterien mit unterschiedlichen Nennspannungen zu laden oder die Ladespannung während des Ladevorgangs zu variieren, um einen möglichst schnellen und/oder batterieschonenden Ladevorgang zu ermöglichen.

Für Fahrzeuge mit hoher elektrischer Leistung kann es vorteilhaft sein, in einem Bordnetz des Kraftfahrzeugs, insbesondere für ein Traktionssystem des Kraftfahrzeugs, relativ hohe Spannungen, beispielsweise Spannungen von bis zu 800 Volt, zu nutzen, um eine hohe Effizienz der Antriebskomponenten zu erreichen und Leitungsdurchmesser im Bordnetz zu reduzieren und somit das Gewicht des Kraftfahrzeugs zu senken. Gleichzeitig soll es jedoch möglich sein, die Energiespeichereinrichtung, die diese Spannung bereitstellt, durch Gleichstromladegeräte zu laden, die möglichst weit verbreitet sind, um einem Nutzer zahlreiche Lademöglichkeiten für sein Kraftfahrzeug bereitzustellen. Die maximale Nennspannung für eine Energiespeichereinrichtung eines Kraftfahrzeugs ist somit durch die üblicherweise durch Ladesäulen bereitgestellte maximale Spannung begrenzt. Beispielsweise ist die maximale Ladespannung in Ladesäulen gemäß dem CHAdeMO-Standard auf 500 V begrenzt. Ein anderer Standard für Ladesäulen, der CCS-Standard, erlaubt Spannungen bis 1000 V. Viele Ladesäulen gemäß dem CCS-Standard sind jedoch ebenfalls auf 500 V begrenzt.

Um ein Laden der Energiespeichereinrichtung des Kraftfahrzeugs durch möglichst viele Ladesäulen zu ermöglichen, ist es bei der momentan vorhandenen Ladeinfrastruktur daher erforderlich, eine Nennspannung der Energiespeichereinrichtung von unter 500 V zu nutzen.

Der Erfindung liegt somit die Aufgabe zugrunde, ein Verfahren zum Betrieb einer Energiespeichereinrichtung anzugeben, durch das höhere Spannungen in einem Bordnetz des Kraftfahrzeugs bereitgestellt werden können, wobei dennoch ein Laden der Energiespeichereinrichtung mit einer Vielzahl von fahrzeugexternen Energiequellen möglich ist.

Die Aufgabe wird erfindungsgemäß dadurch gelöst, dass bei einem Verfahren der eingangs genannten Art durch eine Umschalteinrichtung bei Erfüllung einer eine Energiebereitstellung zum Laden der Energiespiechereinrichtung durch eine fahrzeugexterne Energiequelle anzeigenden Ladebedingung das erste und das zweite Energiespeicherelement parallel geschaltet mit der fahrzeugexternen Energiequelle verbunden werden, wobei durch die fahrzeugexterne Energiequelle eine Ladespannung zum Laden der Energiespeichereinrichtung bereitgestellt wird, die niedriger als die Nennspannung der Energiespeichereinrichtung bei einer Serienschaltung des ersten und des zweiten Energiespeicherelements ist.

Erfindungsgemäß ist somit vorgesehen, bei Nichterfüllung der Ladebedingung, also insbesondere beim Fahrbetrieb des Kraftfahrzeugs, das erste und das zweite Energiespeicherelement in Serie zu schalten und bei Erfüllung der Ladebedingung, also insbesondere während eines Ladevorgangs, das erste und das zweite Energiespeicherelement parallel zu schalten. Durch die Serienschaltung des ersten und des zweiten Energiespeicherelements können im Bordnetz des Kraftfahrzeugs hohe Spannungen verfügbar sein. Da jedoch bei einer Erfüllung der Ladebedingung das erste und das zweite Energiespeicherelement parallel geschaltet werden, wird in diesem Fall die an dem Energiespeicherelement abfallende Spannung verringert, wodurch es möglich ist, das Energiespeicherelement mit geringeren Ladespannungen zu laden. Somit können fahrzeugexterne Energiequellen zum Laden der Energiespeichereinrichtung genutzt werden, die nur eine Ladespannung bereitstellen, die kleiner ist als die Nennspannung der Energiespeichereinrichtung während der Serienschaltung der Energiespeicherelemente.

Eine Energiespeichereinrichtung, die im erfindungsgemäßen Verfahren genutzt wird, kann eine Vielzahl von Batteriezellen umfassen, die teilweise parallel und teilweise in Serie geschaltet sind. Beispielsweise kann die Energiespeichereinrichtung eine Nennspannung von 720 V aufweisen und dadurch gebildet werden, dass jeweils 200 Zellen mit jeweils 3,6 V Nennspannung in Serie geschaltet werden und zwei derartig in Serie geschaltete Zellstränge parallel genutzt werden. Kann eine fahrzeugexterne Energiequelle nun beispielsweise maximal eine Ladespannung von 500 V zur Verfügung stellen, so ist es möglich, die Energiespeichereinrichtung derart umzukonfigurieren, dass nun jeweils 100 der Zellen in Serie geschaltet werden und vier der in Serie geschalteten Zellstränge parallel genutzt werden. Somit wird die Nennspannung der Energiespeichereinrichtung während des Ladebetriebs auf 360 V gesenkt, womit ein Laden mit einer Ladespannung von unterhalb von 500 V möglich ist.

Die Energiebereitstellung durch die fahrzeugexterne Energiequelle kann dem Kraftfahrzeug durch eine Benutzereingabe eines Benutzers, also beispielsweise durch einen Schalter oder ein menügeführtes Bediensystem, mitgeteilt werden. Vorteilhaft wird die Energiebereitstellung jedoch automatisch erfasst. Dabei kann das Erfülltsein der Ladebedingung in Abhängigkeit einer Verbindung einer Ladeverbindungseinrichtung des Kraftfahrzeugs mit der fahrzeugexternen Energiequelle ermittelt werden. Die Verbindung der Ladeverbindungsvorrichtung mit der fahrzeugexternen Energiequelle, also die Energiebereitstellung, kann beispielsweise durch einen mechanischen Schalter an der Ladeverbindungsvorrichtung, der bei einer Verbindung mit der fahrzeugexternen Energiequelle aktiviert wird, oder durch eine Steuereinrichtung, die beispielsweise eine an der Ladungsverbindungsvorrichtung anliegende Spannung erfasst, erkannt werden.

Alternativ oder ergänzend kann die Ladebedingung eine Funkkommunikation mit der fahrzeugexternen Energiequellen auswerten. So kann an der fahrzeugexternen Energiequelle beispielsweise ein RFID-Chip vorgesehen sein, den eine Erfassungseinrichtung des Kraftfahrzeugs erfassen kann, wodurch erkannt wird, dass sich das Kraftfahrzeug im Bereich einer fahrzeugexternen Energiequelle befindet. Eine Auswertung von Funksignalen, optischen Markierungen oder Ähnlichem ist insbesondere dann vorteilhaft, wenn das Laden der Kraftfahrzeugbatterie kontaktlos erfolgen soll. Insbesondere bei einem kontaktlosen Laden kann die Ladebedingung zusätzlich einen Schaltzustand der Zündung oder ähnliches auswerten.

Das Erfülltsein der Ladebedingung kann zusätzlich in Abhängigkeit einer maximal durch die fahrzeugexterne Energiequelle bereitgestellten Ladespannung ermittelt werden. Bei einer Vielzahl von Ladesystemen für Kraftfahrzeugen ist es vorgesehen, dass die fahrzeugexterne Energiequelle vor und/oder während des Ladevorgangs mit einer Steuereinrichtung des Kraftfahrzeugs kommuniziert. Im Rahmen dieser Kommunikation kann eine maximal bereitstellbare Ladespannung übertragen werden. Eine Parallelschaltung von Energiespeicherelementen und damit eine Absenkung der Nennspannung ist besonders dann zweckmäßig, wenn die Nennspannung des Energiespeicherelements während der Serienschaltung des zumindest ersten und zweiten Energiespeicherelements größer ist als die maximale Ladespannung, womit ein Laden erst durch eine Parallelschaltung ermöglicht werden kann.

Dabei ist es ergänzend möglich, dass bei einem Betrieb einer Energiespeichereinrichtung mit mehr als zwei Energiespeicherelementen wenigstens zwei verschiedene Verschaltungen der Energiespeicherelemente vorgesehen sind, bei denen wenigstens ein erstes und ein zweites Energiespeicherelement parallel geschaltet sind, wobei die Art der Verschaltung in Abhängigkeit der maximal bereitgestellten Ladespannung bestimmt wird. Im oben beschriebenen Beispiel, bei dem im normalen Fahrbetrieb jeweils 200 Zellen in Serie und 2 dieser Zellstränge parallel geschaltet sind, kann neben der oben beschriebenen Verschaltung, bei der 100 der Zellen in Serie und vier dieser Stränge parallel geschaltet sind, eine weitere Stufe der Spannungsabsenkung vorgesehen seien, bei der jeweils 50 Zellen in Serie und 8 dieser Zellstränge parallel geschaltet sind. In diesem Fall kann die Nennspannung der Energiespeichereinrichtung während der Erfüllung der Ladebedingung auf 180 V gesenkt werden.

Die Ladeverbindungsvorrichtung kann bei nicht erfüllter Ladebedingung vorteilhaft von der Energiespeichereinrichtung getrennt werden. Dabei können insbesondere sowohl die Phase als auch die Masse getrennt werden. Durch die Trennung der Ladeverbindungsvorrichtung von der Energiespeichereinrichtung und insbesondere vom gesamten Stromnetz des Kraftfahrzeugs wird erreicht, dass die Ladeverbindungseinrichtung außerhalb des Ladebetriebs nicht unter Spannung steht, wodurch insbesondere auf einen aufwendigen Berührschutz verzichtet werden kann.

Vorteilhaft kann bei der Erfüllung der Ladebeindung wenigstens ein Verbraucher, der im Fahrbetrieb des Kraftfahrzeugs durch die Energiespeichereinrichtung versorgt wird, von der Energiespeichereinrichtung getrennt werden. Insbesondere können sowohl die Phase als auch die Masse getrennt werden. Es ist zudem vorteilhaft, wenn alle Verbraucher bei Erfüllung der Ladebedingung von der Energiespeichereinrichtung getrennt werden. Durch die Parallelschaltung der Energiespeicherelemente wird bei Erfüllung der Ladebedingungen die bereitgestellte Spannung abgesenkt. Die Energiespeichereinrichtung kann somit keine ausreichenden Spannungen zur Verfügung stellen, um die Verbraucher zu betreiben. Um eine Fehlfunktion der Verbraucher aufgrund der zu niedrigen Spannung und/oder ein Entladen der Energiespeichereinrichtung durch die Verbraucher zu verhindern, ist es zweckmäßig, diese von der Energiespeichereinrichtung zu trennen.

Als fahrzeugexterne Energiequelle kann ein Gleichspannungsladegerät, das Gleichstrom zum Laden der Energiespeichereinrichtung bereitstellt, genutzt werden. Dabei kann insbesondere vor und/oder während des Ladevorgangs durch das Gleichstromladegerät eine von dem Gleichstromladegerät maximal bereitstellbare Ladespannung an das Kraftfahrzeug kommuniziert werden, wobei das Erfülltsein der Ladebedingung in Abhängigkeit der maximal bereitstellbaren Ladespannung ermittelt wird. Ergänzend oder alternativ kann vorgesehen sein, dass das Kraftfahrzeug die Nennspannung oder die momentane Spannung der Energiespeichereinrichtung an das Gleichstromladegerät kommuniziert. Dabei kann insbesondere zunächst die höchste durch eine entsprechende Verschaltung der Energiespeicherelemente erreichbare Spannung für das Energiespeicherelement an das Gleichstromladegerät kommuniziert werden. Falls dieses zurückmeldet, dass eine entsprechende Spannung nicht bereitgestellt werden kann, so kann die nächst niedrigere durch eine Verschaltung der Energiespeicherelemente erreichbare Spannung des Energiespeicherelements überbetragen werden, bei der zumindest Teile der Energiespeicherelemente parallel geschaltet sind, usw.

Insbesondere können bei Erfassung einer Verbindung einer Ladeverbindungsvorrichtung des Kraftfahrzeugs mit der fahrzeugexternen Energiequelle, falls die maximal bereitstellbare Ladespannung größer ist als ein vorgegebener Spannungsgrenzwert, das erste und das zweite Energiespeicherelement in Serie geschaltet werden oder bleiben und es kann ein Aufladevorgang der Energiespeichereinrichtung begonnen werden. Der Spannungsgrenzwert kann größer oder gleich der Nennspannung des Energiespeicherelements bei einer Serienschaltung des ersten und des zweiten Energiespeicherelements sein. Insbesondere kann der Spannungsgrenzwert einer Summe aus der Nennspannung und einem vorgegebenen Offset entsprechen, wobei der Offset einer Spannung entspricht, um die eine Ladespannung im genutzten Ladeverfahren höher sein muss als die Nennspannung, um die Energiespeichereinrichtung bis zu ihrer Nennspannung zu laden. Ist die maximal bereitstellbare Ladespannung größer als der vorgegebene Spannungsgrenzwert, schaltet die Umschalteinrichtung die Verschaltung der Energiespeicherelemente insbesondere nicht, wodurch die Verschaltung der Energiespeicherelemente im Ladebetrieb der Verschaltung beim Fahrbetrieb des Kraftfahrzeugs entspricht.

Vorteilhaft kann ein Gleichstromladegerät verwendet werden, dessen maximal zur Verfügung gestellte Ladespannung kleiner ist als die Nennspannung der Energiespeichereinrichtung bei einer Serienschaltung des ersten und des zweiten Energiespeicherelements. Durch die erfindungsgemäße Absenkung der Nennspannung der Energiespeichereinrichtung während der Erfüllung einer Ladebedingung sind auch Gleichstromladegeräte nutzbar, die relativ geringe maximale Ladespannungen zur Verfügung stellen.

Daneben betrifft die Erfindung ein Kraftfahrzeug mit einer Energiespeichereinrichtung zur Energieversorgung wenigstens eines Verbrauchers, wobei die Energiespeichereinrichtung wenigstens ein erstes und ein zweites Energiespeicherelement umfasst und wobei das Kraftfahrzeug zur Durchführung des erfindungsgemäßen Verfahrens ausgebildet ist.

Das erfindungsgemäße Kraftfahrzeuge kann dabei insbesondere ein reines Elektrofahrzeug oder ein Hybridfahrzeug, insbesondere ein Steckdosenhybrid, sein.

Vorteilhaft umfasst die Energiespeichereinrichtung eine erste Gruppe von mehreren Energiespeicherelementen und eine zweite Gruppe von mehrere Energiespeicherelementen, wobei die Energiespeicherelemente innerhalb der jeweiligen Gruppe parallel und/oder seriell und/oder teilweise seriell und teilweise parallel verschaltet sind, wobei jede Gruppen einen ersten und einen zweiten Anschlusspunkt aufweist, über die den Energiespeicherelementen der jeweiligen Gruppe Strom zugeführt und/oder entnommen werden kann und zwischen denen eine Gruppenspannung abfällt. Dabei kann beispielsweise jede der Gruppen zwei parallel geschaltete Stränge von Batteriezellen mit jeweils 100 seriell verschalteten Batteriezellen pro Strang umfassen.

Die erste und die zweite Gruppe, sowie insbesondere weitere Gruppen können dabei gemeinsam in einem Gehäuse angeordnet sein. Es ist jedoch auch möglich, für jede der Gruppen ein separates Gehäuse vorzusehen und/oder die Gruppen räumlich getrennt in unterschiedlichen Fahrzeugbereichen anzuordnen.

Die Umschalteinrichtung kann dazu ausgebildet sein, bei Nichterfüllung der Ladebedingung den ersten Anschlusspunkt der ersten Gruppe mit dem zweiten Anschlusspunkt der zweiten Gruppe zu verbinden und bei Erfüllung der Ladebedingung den ersten Anschlusspunkt der ersten Gruppe mit dem ersten Anschlusspunkt der zweiten Gruppe und den zweiten Anschlusspunkt der ersten Gruppe mit dem zweiten Anschlusspunkt der zweiten Gruppe zu verbinden. Dabei kann der erste Anschlusspunkt jeweils ein Pluspol und der zweite Anschlusspunkt jeweils ein Minuspol sein oder umgekehrt. Durch eine Verbindung der beiden ersten Anschlusspunkte und der beiden zweiten Anschlusspunkte wird eine Parallelschaltung der Gruppen erreicht und durch eine Verbindung des ersten Anschlusspunkts der ersten Gruppe mit dem zweiten Anschlusspunkt der zweiten Gruppe eine Serienschaltung der Gruppen.

Alternativ ist es möglich, dass die Energiespeichereinrichtung wenigstens zwei weitere Energiespeicherelemente umfasst, wobei die Umschalteinrichtung ausgebildet ist, bei Nichterfüllung der Ladebedingung wenigstens eines der weiteren Energiespeicherelemente in Serie mit der ersten Gruppe und wenigstens eines der weiteren Energiespeicherelemente in Serie mit der zweiten Gruppe zu schalten, und bei Erfüllung der Ladebedingung die weiteren Energiespeicherelemente parallel zur ersten und zur zweiten Gruppe zu schalten, wobei die erste und die zweite Gruppe parallel geschaltet sind. Die weiteren Energiespeicherelemente können bei Erfüllung der Ladebedingungen insbesondere in Serie geschaltet sein. In diesem Fall bilden die weiteren Energiespeicherelemente eine weitere Gruppe von Energiespeicherelementen, die bei Erfüllung der Ladebedingung parallel zu der ersten und zweiten Gruppe von Energiespeicherelementen geschaltet ist, die jedoch bei Nichterfüllung der Ladebedingung auf die weiteren Gruppen "verteilt" wird.

Beispielsweise kann vorgesehen sein, dass die erste und die zweite Gruppe jeweils 100 in Serie geschaltete Energiespeicherelemente umfassen und die dritte Gruppe 100 weitere Energiespeicherelemente umfasst, die bei Erfüllung der Ladebedingung in Serie zueinander und parallel zur ersten und zur zweiten Gruppe geschaltet sind. Ist die Ladebedingung nicht erfüllt, insbesondere während des normalen Fahrbetriebs, können nun 50 der weiteren Energiespeicherelemente in Serie zur ersten Gruppe und 50 der weiteren Energiespeicherelemente in Serie zur zweiten Gruppe geschaltet werden, wodurch die Energiespeichereinrichtung zwei parallele Stränge von Energiespeicherelementen mit jeweils 150 Energiespeicherelementen umfasst. Die Nennspannung der Energiespeichereinrichtung wäre somit bei einer Erfüllung der Ladebedingung um den Faktor 1,5 kleiner als bei einer Nichterfüllung der Ladebedingung.

Das Kraftfahrzeug kann insbesondere eine Steuereinrichtung umfassen, die dazu ausgebildet ist, als Ladeinformation eine Verbindung einer Ladeverbindungsvorrichtung des Kraftfahrzeugs mit der fahrzeugexternen Energiequelle und insbesondere eine maximale Ladespannung der fahrzeugexternen Energiequelle zu erfassen und die Umschalteinrichtung in Abhängigkeit der Ladeinformation anzusteuern.

Weitere Vorteile und Einzelheiten der Erfindung ergeben sich aus den folgenden Ausführungsbeispielen sowie den zugehörigen Zeichnungen. Dabei zeigen:
- Fig. 1: schematisch ein Ablaufdiagramm eines Ausführungsbeispiels des erfindungsgemäßen Verfahrens,
- Fig. 2: schematisch ein Ausführungsbeispiel eines erfindungsgemäßen Kraftfahrzeugs,
- Fig. 3: schematisch eine Detailansicht einer Energiespeichereinrichtung des in der Fig. 2 gezeigten Kraftfahrzeugs bei nicht erfüllter Ladebedingung,
- Fig. 4: schematisch die in Fig. 3 gezeigte Detailansicht bei erfüllter Ladebedingung, und
- Fig. 5: schematisch eine Detailansicht einer Energiespeichereinrichtung eines weiteren Ausführungsbeispiels eines erfindungsgemäßen Kraftfahrzeugs.

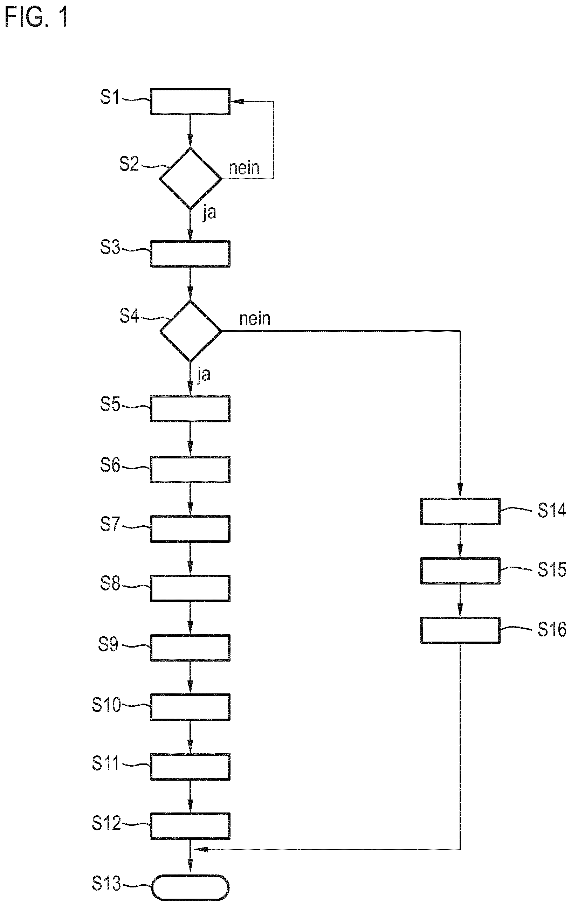

Fig. 1 zeigt schematisch ein Ablaufdiagramm eines Verfahrens zum Betrieb einer Energiespeichereinrichtung in einem Kraftfahrzeug. Das Kraftfahrzeug umfasst dabei wenigstens ein erstes Energiespeicherelement und wenigstens ein zweites Energiespeicherelement. Zur Bereitstellung einer Nennspannung der Energiespeichereinrichtung sind das erste und das zweite Energiespeicherelement in Serie geschaltet. Beispielsweise kann das Kraftfahrzeug 200 erste Energiespeicherelemente umfassen, die in zwei parallel geschaltete Stränge mit jeweils 100 in Serie geschalteten Energiespeicherelementen aufgeteilt sind, und 200 ebenso verschaltete zweite Energiespeicherelemente. Die ersten Energiespeicherelemente können dabei als erste Gruppe und die zweiten Energiespeicherelemente als zweite Gruppe betrachtet werden, wobei die erste Gruppe und die zweite Gruppe im Fahrbetrieb in Serie geschaltet sind.

Um ein Laden des Kraftfahrzeugs auch mit fahrzeugexternen Energiequellen zu ermöglichen, deren maximal zur Verfügung stehende Ladespannung geringer ist als die Nennspannung der Energiespeichereinrichtung bei einer Serienschaltung des ersten und des zweiten Energiespeicherelements bzw. der ersten und der zweiten Gruppe, ist vorgesehen, dass bei Erfüllung einer Ladebedingung das erste und das zweite Energiespeicherelement bzw. die erste und die zweite Gruppe parallel geschaltet werden, um die Spannung der Energiespeichereinrichtung und damit die erforderliche Ladespannung zu verringern.

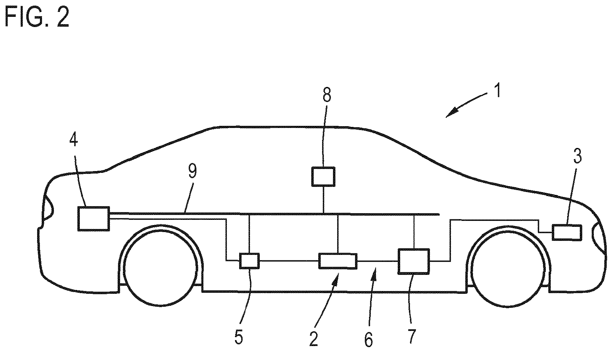

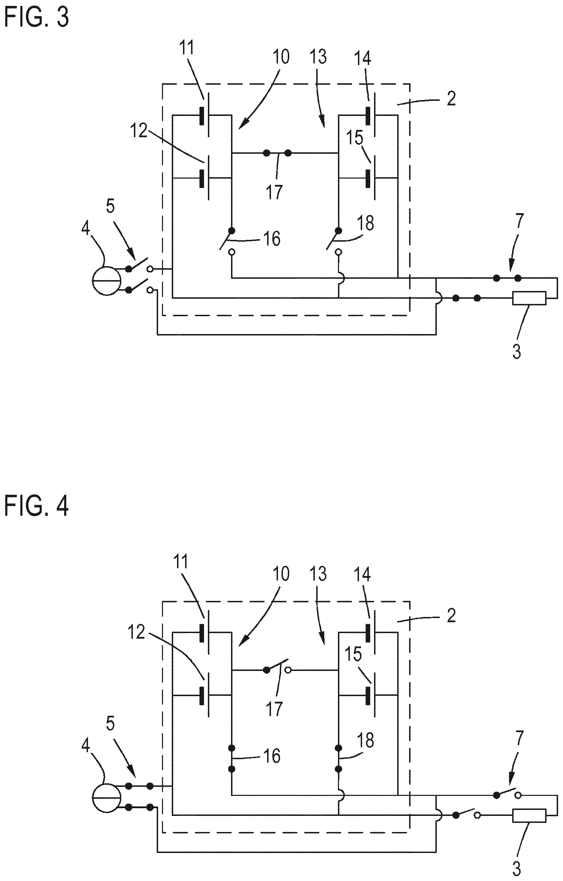

Das Verfahren wird nachfolgend mit Bezug auf die Fig. 2, 3 und 4 beschrieben, wobei Fig. 2 ein Kraftfahrzeug 1 zeigt, das zur Durchführung des in Fig. 1 gezeigten Verfahrens ausgebildet ist und die Fig. 2 und 3 jeweils eine Detailansicht einer Energiespeichereinrichtung 2 des Kraftfahrzeugs 1 zeigen. Fig. 3 zeigt den Zustand des Energiespeicherelements 2 während des normalen Fahrbetriebs, wenn eine Ladebedingung nicht erfüllt ist, und Fig. 4 zeigt den Zustand des Energiespeicherelements 2 während des Ladens des Kraftfahrzeugs mit einer fahrzeugexternen Energiequelle bei Erfülltsein der Ladebedingung.

In Schritt S1 wird erfasst, ob eine fahrzeugexterne Energiequelle mit der Ladeverbindungsvorrichtung 4 verbunden ist. Hierzu umfasst die Ladeverbindungsvorrichtung 4 einen nicht gezeigten Sensor, nämlich einen Schalter, der ein Einstecken eines Ladekabels erfasst. Der Zustand des Sensors wird durch die Steuereinrichtung 8 über ein Kraftfahrzeugbus 9 erfasst.

In Schritt S2 wird durch die Steuereinrichtung 8 überprüft, ob der erfasste Sensorzustand eine Verbindung der fahrzeugexternen Energiequelle mit der Ladeverbindungsvorrichtung 4 anzeigt. Falls dies nicht der Fall ist, wird das Verfahren ab Schritt S1 wiederholt, das heißt die Steuereinrichtung 8 wartet, bis ein Ladekabel mit der Ladeverbindungsvorrichtung 4 verbunden wird.

Wurde in Schritt S2 eine Verbindung der Ladeverbindungsvorrichtung 4 mit einer fahrzeugexternen Energiequelle festgestellt, so ermittelt die Steuereinrichtung 8 in Schritt S3 eine durch die fahrzeugexterne Energiequelle, die ein Gleichstromladegerät ist, maximal bereitstellbare Ladespannung. Hierzu ist im Ladekabel und in der Ladeverbindungsvorrichtung 4 eine zusätzliche Leitung zur Kommunikation zwischen Steuereinrichtung 8 und fahrzeugexterner Energiequelle vorgesehen. Alternativ wäre es möglich, dass die Steuereinrichtung 8 über eine drahtlose Kommunikationsvorrichtung mit der fahrzeugexternen Energiequelle kommuniziert.

In Schritt S4 wird überprüft, ob die in Schritt S3 ermittelte maximal bereitstellbare Ladespannung kleiner ist als ein in der Steuereinrichtung 8 gespeicherter Grenzwert. Der Grenzwert entspricht dabei der Summe aus einer Nennspannung der Energiespeichereinrichtung bei einer Serienschaltung des ersten und des zweiten Energiespeicherelements bzw. der ersten und der zweiten Gruppe und einem zusätzlichen Offset. Der Offset ist so gewählt, dass bei einem gewählten Ladeverfahren ein Laden der Energiespeichereinrichtung bis zur Nennspannung mit einer Spannung, die dem Grenzwert entspricht, möglich ist.

Im Kraftfahrzeug 1 umfasst die Energiespeichereinrichtung 2, wie in Fig. 3 und Fig. 4 gezeigt, eine erste Gruppe 10 und eine zweite Gruppe 13 von Energiespeicherelementen. Die erste Gruppe 10 ist dabei vereinfachend als eine Parallelschaltung von zwei ersten Energiespeicherelementen 11, 12 dargestellt. In einer realen Batterie werden anstelle der gezeigten Energiespeicherelemente 11, 12 typischerweise jeweils eine Vielzahl von in Serie geschalteten Energiespeicherelementen genutzt. Die Darstellung jeweils eines Energiespeicherelements 11, 12 dient der größeren Übersichtlichkeit. Die beiden ersten Energiespeicherelemente 11, 12 stellen eine Spannung von 360 V bereit und können in einer realen Batterie beispielsweise jeweils durch 100 Batteriezellen mit einer Spannung von jeweils 3,6 V, die in Serie geschaltet sind, gebildet werden. Die zweite Gruppe 13 ist entsprechend aufgebaut und umfasst die zweiten Energiespeicherelemente 14, 15, für die das zu den ersten Energiespeicherelementen 11, 12 Gesagte gilt. Im Fahrbetrieb sind die erste Gruppe 10 und die zweite Gruppe 13 in Serie geschaltet, womit die Nennspannung der Energiespeichereinrichtung 2 720 V ist. Wie erläutert entspricht der Grenzwert der Summe aus dieser Nennspannung und einem zusätzlichen Offsets. Der Grenzwert kann beispielsweise 760 V sein.

Wurde in Schritt S4 ermittelt, dass die fahrzeugexterne Quelle nur eine maximale Ladespannung bereitstellen kann, die kleiner ist als der Grenzwert, beispielsweise nur 500 V, so wird in Schritt S5 der Verbraucher 3, der ein Elektromotor ist, sowie potentiell weitere, nicht gezeigte Verbraucher, von der Energiespeichereinrichtung 2 getrennt. Die Trennung erfolgt durch Ansteuerung der Schalter 7 durch die Steuereinrichtung 8. Entsprechend sind in Fig. 3 die Schalter 7 im geschlossenen und in Fig. 4 die Schalter 7 im offenen Zustand gezeigt. Durch die Trennung des Verbrauchers 3 von der Energiespeichereinrichtung 2 wird erreicht, dass bei der nachfolgenden Absenkung der Spannung der Energiespeichereinrichtung 2 diese abgesenkte Spannung nicht am Verbraucher anliegt. Es wird also eine Entladung der Energiespeichereinrichtung und ein Betrieb eines Verbrauchers mit einer nicht passenden Spannung vermieden.

Anschließend werden in Schritt S6 die ersten und die zweiten Energiespeicherelemente bzw. die erste und die zweite Gruppe von Energiespeicherelementen parallel geschaltet. Hierzu steuert die Steuereinrichtung 8 die Schalter 16, 17 und 18 der Energiespeichereinrichtung 2 an. Die Stellung der Schalter 16, 17, 18 vor der Umschaltung ist in Fig. 3 gezeigt und die Stellung nach der Umschaltung in Fig. 4. Über den Schalter 16 ist ein erster Anschlusspunkt der ersten Gruppe 10 mit einem ersten Anschlusspunkt der zweiten Gruppe 13 verbunden, über den Schalter 17 der erste Anschlusspunkt der ersten Gruppe 10 mit einem zweiten Anschlusspunkt der zweiten Gruppe 13 und über den Schalter 18 ein zweiter Anschlusspunkt der ersten Gruppe 10 mit dem zweiten Anschlusspunkt der zweiten Gruppe 13. Die ersten Anschlusspunkte der Gruppen 10, 13 stellen jeweils die Pluspole der jeweiligen Gruppe 10, 13 dar und die zweiten Anschlusspunkte die Minuspole der jeweiligen Gruppe 10, 13.

Im Fahrbetrieb, d. h. bei Nichterfüllung der Ladebedingung, sind die Schalter 16, 18 geöffnet und der Schalter 17 geschlossen, womit die erste Gruppe 10 und die zweite Gruppe 13 in Serie geschaltet sind und daher die ersten Energiespeicherelemente 11, 12 in Serie zu den zweiten Energiespeicherelementen 14, 15 geschaltet sind.

Nach dem Umschalten in Schritt S6 sind, wie in Fig. 4 gezeigt, die Schalter 16, 18 geschlossen und der Schalter 17 ist geöffnet. Somit ist die erste Gruppe 10 parallel zu der zweiten Gruppe 13 geschaltet, womit die ersten Energiespeicherelemente 11, 12 parallel zu den zweiten Energiespeicherelementen 14, 15 geschaltet sind. Die Nennspannung der Energiespeichereinrichtung 2 ist daher um den Faktor 2 verringert, also 360 V.

In Schritt S7 wird durch eine Kommunikation der Steuereinrichtung 8 mit der fahrzeugexternen Energiequelle die durch die Energiequelle zur Verfügung gestellte Ladespannung angepasst, wonach im Schritt S8 die Ladeverbindungsvorrichtung 4 mit der Energiespeichereinrichtung 2 verbunden wird, indem die Schalter 5 geschlossen werden. In Schritt S9 erfolgt ein Laden der Energiespeichereinrichtung 2 durch die fahrzeugexterne Energiequelle. Nach dem Abschluss bzw. einem Unterbrechen des Ladens wird in Schritt S10 die Ladeverbindungseinrichtung durch Öffnen der Schalter 5 von der Energiespeichereinrichtung 2 getrennt, wonach in Schritt S11 durch eine entsprechende Ansteuerung der Schalter 16, 17, 18 durch die Steuereinrichtung 8 die erste Gruppe 10 und die zweite Gruppe 13 der Energiespeicherelemente in der Energiespeichereinrichtung 2 wiederum in Serie geschaltet werden. Die Nennspannung der Energiespeichereinrichtung wird wiederum auf 720 V erhöht. Anschließend wird in Schritt S12 der Verbraucher 3 durch Schließen der Schalter 7 wieder mit der Energiespeichereinrichtung 2 verbunden. Damit ist in Schritt S13 das Kraftfahrzeug 1 wieder fahrbereit und kann normal betrieben werden.

Wird in Schritt S4 ermittelt, dass die maximal bereitstellbare Ladespannung größer ist als der vorgegebene Grenzwert, so erfolgt ein Laden der Energiespeichereinrichtung ohne dass das wenigstens eine erste und das wenigstens eine zweite Energiespeicherelement 11, 12, 14, 15 bzw. ohne dass die erste und die zweite Gruppe 10, 13 parallel geschaltet werden. Das Laden erfolgt also bei einer Nennspannung der Energiespeichereinrichtung 2 von 720 V. Hierzu wird in Schritt S14 wie zu Schritt S8 beschrieben die Ladeverbindungseinrichtung 4 durch Schalten der Schalter 5 mit der Energiespeichereinrichtung 2 verbunden, in Schritt S15 erfolgt ein Laden der Batterie und Schritt S16 wird die Ladeverbindungseinrichtung 4 durch Öffnen der Schalter 5 wieder von der Energiespeichereinrichtung 2 getrennt. Das Verfahren endet in diesem Fall ebenfalls mit Schritt S13.

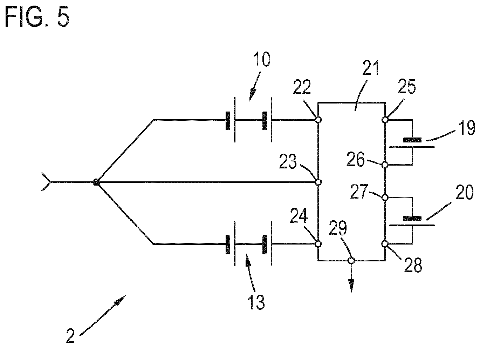

Fig. 5 zeigt eine Energiespeichereinrichtung eines weiteren Ausführungsbeispiels eines Kraftfahrzeugs. Die Energiespeichereinrichtung 2 umfasst eine erste Gruppe 10 und eine zweite Gruppe 13 von Energiespeicherelementen sowie die zwei weiteren Energiespeicherelemente 19, 20. Durch eine nicht gezeigte Steuereinrichtung wird die Umschalteinrichtung 21 derart gesteuert, dass die Anschlüsse 22, 23, 24, 25, 26, 27, 28, 29 der Umschalteinrichtung 21 in Abhängigkeit der Erfüllung der Ladebedingung verbunden oder getrennt werden. Ist die Ladebedingung erfüllt, so sind die Anschlüsse 22, 24 und 28 mit dem Anschluss 29 verbunden, der Anschluss 23 ist mit dem Anschluss 25 verbunden und der Anschluss 26 mit dem Anschluss 27. Damit ist der Anschluss 23 über die in Serie geschalteten weiteren Energiespeicherelemente 19, 20 mit dem Anschluss 29 verbunden und die weiteren Energiespeicherelemente 19, 20 sind somit parallel zur ersten Gruppe 10 und zur zweiten Gruppe 13 geschaltet. Ist die Ladebedingung hingegen nicht erfüllt, steuert die nicht gezeigte Steuereinrichtung die Umschalteinrichtung 21 derart an, dass Anschluss 22 mit dem Anschluss 25 und der Anschluss 26 mit dem Anschluss 29 verbunden ist, so dass das weitere Energiespeicherelement 19 in Serie mit den Energiespeicherelementen der ersten Gruppe 10 verbunden ist. Zudem wird der Anschluss 24 mit dem Anschluss 27 und der Anschluss 28 mit dem Anschluss 29 verbunden, so dass das weitere Energiespeicherelement 20 in Serie mit den Energiespeicherelementen der zweiten Gruppe 13 geschaltet ist. Anschluss 23 bleibt unverbunden. In diesem Fall sind die Energiespeicherelemente derart verbunden, dass jeweils drei Energiespeicherelemente in Serie geschaltet sind und zwei derartige Stränge parallel geschaltet sind. Daher ist die Spannung der Energiespeichereinrichtung in dem Fall, dass die Ladebedingung erfüllt ist, gegenüber dem Fall, dass die Ladebedingung nicht erfüllt ist, um den Faktor 1,5 reduziert.

## Patentansprüche

1. Verfahren zum Betrieb einer Energiespeichereinrichtung in einem Kraftfahrzeug, wobei die Energiespeichereinrichtung eine erste Gruppe von mehreren Energiespeicherelementen und eine zweite Gruppe von mehreren Energiespeicherelementen umfasst, wobei die Energiespeicherelemente innerhalb der jeweiligen Gruppe parallel und/oder seriell und/oder teilweise seriell und teilweise parallel verschaltet sind, wobei jede Gruppe einen ersten und einen zweiten Anschlusspunkt aufweist, über die den Energiespeicherelementen der jeweilige Gruppe Strom zugeführt und/oder entnommen werden kann und zwischen denen eine Gruppenspannung abfällt, wobei die Energiespeichereinrichtung (2) wenigstens zwei weitere Energiespeicherelemente (19, 20) umfasst, wobei durch eine Umschalteinrichtung bei Erfüllung einer eine Energiebereitstellung zum Laden der Energiespeichereinrichtung durch eine fahrzeugexterne Energiequelle anzeigenden Ladebedingung die erste Gruppe, die zweite Gruppe und die weiteren Energiespeicherelemente parallel geschaltet mit der fahrzeugexternen Energiequelle verbunden werden, indem die weiteren Energiespeicherelemente parallel zur ersten und zur zweiten Gruppe und die erste und die zweite Gruppe parallel geschaltet werden, und bei einer Nichterfüllung der Ladebedingung zur Bereitstellung einer Nennspannung der Energiespeichereinrichtung wenigstens ein erstes der weiteren Energiespeicherelemente in Serie mit der ersten Gruppe und wenigstens ein zweites der weiteren Energiespeicherelemente in Serie mit der zweiten Gruppe geschaltet wird, wobei durch die fahrzeugexterne Energiequelle eine Ladespannung zum Laden der Energiespeichereinrichtung bereitgestellt wird, die niedriger als die Nennspannung der Energiespeichereinrichtung bei einer Serienschaltung des ersten der weiteren Energiespeicherelemente mit der ersten und des zweiten der weiteren Energiespeicherelemente mit der zweiten Gruppe ist.

2. Verfahren nach Anspruch 1,
**dadurch gekennzeichnet, dass** das Erfülltsein der Ladebedingung in Abhängigkeit einer Verbindung einer Ladeverbindungsvorrichtung des Kraftfahrzeugs mit der fahrzeugexternen Energiequelle ermittelt wird.

3. Verfahren nach Anspruch 2,
**dadurch gekennzeichnet, dass** die Ladeverbindungsvorrichtung bei nicht erfüllter Ladebedingung von der Energiespeichereinrichtung getrennt wird.

4. Verfahren nach einem der vorangehenden Ansprüche,
**dadurch gekennzeichnet,**
**dass** bei Erfüllung der Ladebedingung wenigstens ein Verbraucher, der im Fahrbetrieb des Kraftfahrzeugs durch die Energiespeichereinrichtung versorgt wird, von der Energiespeichereinrichtung getrennt wird.

5. Verfahren nach einem der vorangehenden Ansprüche,
**dadurch gekennzeichnet,**
**dass** als fahrzeugexterne Energiequelle ein Gleichstromladegerät, das Gleichstrom zum Laden der Energiespeichereinrichtung bereitstellt, genutzt wird.

6. Verfahren nach Anspruch 5,
**dadurch gekennzeichnet**, das vor und/oder während des Ladevorgangs durch das Gleichstromladegerät eine von dem Gleichstromladegerät maximal bereitstellbare Ladespannung an das Kraftfahrzeug kommuniziert wird, wobei das Erfülltsein der Ladebedingung in Abhängigkeit der maximal bereitstellbaren Ladespannung ermittelt wird.

7. Verfahren nach Anspruch 6,
**dadurch gekennzeichnet,**
**dass** bei Erfassen einer Verbindung einer Ladeverbindungsvorrichtung des Kraftfahrzeugs mit der fahrzeugexternen Energiequelle, falls die maximal bereitstellbare Ladespannung größer ist als ein vorgegebener Spannungsgrenzwert, das erste der weiteren Energiespeicherelemente mit der ersten und das zweite der weiteren Energiespeicherelemente mit der zweiten Gruppe in Serie geschaltet werden oder bleiben und ein Aufladevorgang der Energiespeichereinrichtung begonnen wird.

8. Kraftfahrzeug (1) mit einer Energiespeichereinrichtung (2) zur Energieversorgung wenigstens eines Verbrauchers (3), wobei die Energiespeichereinrichtung (2) eine erste Gruppe (10) von mehreren Energiespeicherelementen (11, 12) und eine zweite Gruppe (13) von mehreren Energiespeicherelementen (14, 15) umfasst, wobei die Energiespeicherelemente (11, 12, 14,15) innerhalb der jeweiligen Gruppe (10, 13) parallel und/oder seriell und/oder teilweise seriell und teilweise parallel verschaltet sind, wobei jede Gruppe (10, 13) einen ersten und einen zweiten Anschlusspunkt aufweist, über die den Energiespeicherelementen (11, 12, 14, 15) der jeweilige Gruppe Strom zugeführt und/oder entnommen werden kann und zwischen denen eine Gruppenspannung abfällt, wobei die Energiespeichereinrichtung (2) wenigstens zwei weitere Energiespeicherelemente (19, 20) umfasst, wobei das Kraftfahrzeug (1) zur Durchführung des Verfahrens nach einem der vorangehenden Ansprüche ausgebildet ist, wobei die Umschalteinrichtung (21) ausgebildet ist, bei Nichterfüllung der Ladebedingung wenigstens eines der weiteren Energiespeicherelemente (19) in Serie mit der ersten Gruppe (10) und wenigstens eines der weiteren Energiespeicherelemente (20) in Serie mit der zweiten Gruppe (13) zu schalten, und bei Erfüllung der Ladebedingung die weiteren Energiespeicherelemente (19, 20) parallel zur ersten und zur zweiten Gruppe (10, 13) zu schalten, wobei die erste und die zweite Gruppe (10, 13) parallel geschaltet sind.

9. Kraftfahrzeug nach Anspruch 8,
**dadurch gekennzeichnet, dass** das Kraftfahrzeug (1) eine Steuereinrichtung (8) umfasst, die dazu ausgebildet ist, als Ladeinformation eine Verbindung einer Ladeverbindungsvorrichtung (4) des Kraftfahrzeugs (1) mit der fahrzeugexternen Energiequelle und insbesondere eine maximale Ladespannung der fahrzeugexternen Energiequelle zu erfassen und die Umschalteinrichtung (21) in Abhängigkeit der Ladeinformation anzusteuern.

## Claims

1. Method for operating an energy storage apparatus in a motor vehicle, wherein the energy storage apparatus includes a first group of several energy storage elements and a second group of several energy storage elements, wherein the energy storage elements within the respective group are connected in parallel and/or in series and/or partially in series and partially in parallel, wherein each group has a first and a second junction point, via which electric current can be supplied to and/or removed from the energy storage elements of the respective group and between which a group voltage drops, wherein the energy storage apparatus (2) includes at least two further energy storage elements (19, 20), wherein, when a charging condition is fulfilled which displays an energy provision for charging the energy storage apparatus on the part of an energy source external to the vehicle, by means of a switchover apparatus the first group, the second group and the further energy storage elements are connected with the energy source external to the vehicle, connected in parallel, in that the further energy storage elements are connected in parallel to the first and to the second group, and the first and the second group are connected in parallel, and if the charging condition is not fulfilled, in order to provide a nominal voltage for the energy storage apparatus at least one first of the further energy storage elements is connected in series with the first group and at least one second of the further energy storage elements is connected in series with the second group, wherein by means of the energy source external to the vehicle a charging voltage is provided for charging the energy storage apparatus which is lower than the nominal voltage of the energy storage apparatus when the first of the further energy storage elements is connected in series with the first and the second of the further energy storage elements with the second group.

2. Method according to claim 1,
**characterised in that** the fulfilment of the charging condition is determined as a function of the connection of a charging connecting device of the motor vehicle with the energy source external to the vehicle.

3. Method according to claim 2,
**characterised in that** the charging connecting device is disconnected from the energy storage apparatus if the charging condition is not fulfilled.

4. Method according to any of the preceding claims,
**characterised in**
**that** if the charging condition is fulfilled at least one subscriber, which is supplied by the energy storage apparatus during drive operation of the motor vehicle, is disconnected from the energy storage apparatus.

5. Method according to any of the preceding claims,
**characterised in**
**that** a direct current charging device, which provides direct current for charging the energy storage apparatus, is used as an energy source external to the vehicle.

6. Method according to claim 5,
**characterised in**
**that** prior to and/or during the charging procedure on the part of the direct current charging device a charging voltage is communicated to the motor-vehicle which is the maximum charging voltage which can be provided by the direct current charging device, wherein the fulfilment of the charging condition is determined as a function of the maximum charging voltage which can be provided.

7. Method according to claim 6,
**characterised in**
**that** when determining a connection of a charging connecting device of the motor vehicle with the energy source external to the vehicle, in the case that the maximum providable charging voltage is greater than a predetermined voltage threshold value, the first of the further energy storage elements is connected or remains connected in series with the first, and the second of the further energy storage elements with the second group, and a charging procedure of the energy storage apparatus is started.

8. Motor vehicle (1) having an energy storage apparatus (2) for supplying energy to at least one subscriber (3), wherein the energy storage apparatus (2) includes a first group (10) of several energy storage elements (11, 12) and a second group (13) of several energy storage elements (14, 15), wherein the energy storage elements (11, 12, 14, 15) are connected within the respective group (10, 13) in parallel and/or in series and/or partially in series and partially in parallel, wherein each group (10, 13) has a first and a second junction point by means of which electric current can be supplied to and/or removed from the energy storage elements (11, 12, 14, 15) of the respective group and between which a group voltage drops, wherein the energy storage apparatus (2) includes at least two further energy storage elements (19, 20), wherein the motor vehicle (1) is designed to carry out the method according to one of the preceding claims, wherein the switchover apparatus (21) is configured, if the charging condition is not fulfilled, to connect at least one of the further energy storage elements (19) in series with the first group (10) and at least one of the further energy storage elements (20) in series with the second group (13), and, if the charging condition is fulfilled, to connect the further energy storage elements (19, 20) in parallel with the first and with the second group (10, 13), wherein the first and the second group (10, 13) are connected in parallel.

9. Motor vehicle according to claim 8,
**characterised in that** the motor vehicle (1) includes a control apparatus (8) which is configured to detect as charging information a connection of a charging connecting device (4) of the motor vehicle (1) with the energy source external to the vehicle and in particular a maximum charging voltage of the energy source external to the vehicle and to control the switchover apparatus (21) as a function of the charging information.

## Revendications

1. Procédé pour faire fonctionner un dispositif de stockage d'énergie dans un véhicule automobile, dans lequel le dispositif de stockage d'énergie comprend un premier groupe de plusieurs éléments de stockage d'énergie et un second groupe de plusieurs éléments de stockage d'énergie, dans lequel les éléments de stockage d'énergie à l'intérieur du groupe respectif sont montés en parallèle et/ou en série et/ou partiellement en série et partiellement en parallèle, dans lequel chaque groupe présente un premier et un second point de connexion, par lequel du courant peut être fourni et/ou retiré des éléments de stockage d'énergie du groupe respectif et entre lesquels une tension de groupe chute, dans lequel le dispositif de stockage d'énergie (2) comprend au moins deux autres éléments de stockage d'énergie (19, 20), dans lequel le premier groupe, le second groupe et les autres éléments de stockage d'énergie sont montés en parallèle avec la source d'énergie externe au véhicule par un dispositif de commutation lorsqu'une condition de charge indiquant une alimentation en énergie pour charger le dispositif de stockage d'énergie par une source d'énergie externe au véhicule est satisfaite, en ce que les autres éléments de stockage d'énergie sont montés en parallèle avec les premier et second groupes et les premier et second groupes sont montés en parallèle, et en cas de non-respect de la condition de charge pour fournir une tension nominale du dispositif de stockage d'énergie, au moins un premier des autres éléments de stockage d'énergie est monté en série avec le premier groupe et au moins un second des autres éléments de stockage d'énergie est monté en série avec le second groupe, dans lequel une tension de charge pour charger le dispositif de stockage d'énergie est fournie par la source d'énergie externe au véhicule, qui est inférieure à la tension nominale du dispositif de stockage d'énergie dans le cas d'un montage en série du premier des autres éléments de stockage d'énergie avec le premier groupe et du second des autres éléments de stockage d'énergie avec le second groupe.

2. Procédé selon la revendication 1,
**caractérisé en ce que** la satisfaction de la condition de charge est déterminée en fonction d'une connexion d'un dispositif de connexion de charge du véhicule automobile à la source d'énergie externe au véhicule.

3. Procédé selon la revendication 2,
**caractérisé en ce que** le dispositif de connexion de charge est déconnecté du dispositif de stockage d'énergie si la condition de charge n'est pas satisfaite.

4. Procédé selon l'une quelconque des revendications précédentes,
**caractérisé en ce**
**que**, lorsque la condition de charge est satisfaite, au moins un consommateur qui est alimenté par le dispositif de stockage d'énergie pendant la conduite du véhicule automobile est déconnecté du dispositif de stockage d'énergie.

5. Procédé selon l'une quelconque des revendications précédentes,
**caractérisé en ce**
**qu'**un chargeur à courant continu qui fournit du courant continu pour charger le dispositif de stockage d'énergie est utilisé comme source d'énergie externe au véhicule.

6. Procédé selon la revendication 5,
**caractérisé en ce qu'**avant et/ou pendant l'opération de recharge par le chargeur à courant continu, une tension de charge maximale pouvant être fournie par le chargeur à courant continu est communiquée au véhicule automobile, dans lequel la satisfaction de la condition de charge est déterminée en fonction de la tension de charge maximale pouvant être fournie.

7. Procédé selon la revendication 6,
**caractérisé en ce**
**que** lorsqu'une connexion d'un dispositif de connexion de charge du véhicule automobile à la source d'énergie externe au véhicule est détectée, si la tension de charge maximale pouvant être fournie est supérieure à une valeur limite de tension prédéterminée, le premier des autres éléments de stockage d'énergie avec le premier groupe et le second des autres éléments de stockage d'énergie avec le second groupe sont ou restent montés en série et un processus de charge du dispositif de stockage d'énergie est lancé.

8. Véhicule automobile (1) avec un dispositif de stockage d'énergie (2) pour alimenter en énergie au moins un consommateur (3), dans lequel le dispositif de stockage d'énergie (2) comprend un premier groupe (10) de plusieurs éléments de stockage d'énergie (11, 12) et un second groupe (13) de plusieurs éléments de stockage d'énergie (14, 15), dans lequel les éléments de stockage d'énergie (11, 12, 14, 15) au sein du groupe respectif (10, 13) sont montés en parallèle et/ou en série et/ou partiellement en série et partiellement en parallèle, dans lequel chaque groupe (10, 13) présente un premier et un second point de raccordement, par lesquels le courant peut être fourni et/ou retiré des éléments de stockage d'énergie (11, 12, 14, 15) du groupe respectif et entre lesquels une tension de groupe chute, dans lequel le dispositif de stockage d'énergie (2) comprend au moins deux autres éléments de stockage d'énergie (19, 20), dans lequel le véhicule automobile (1) est conçu pour exécuter le procédé selon l'une quelconque des revendications précédentes, dans lequel le dispositif de commutation (21) est conçu pour connecter au moins un des autres éléments de stockage d'énergie (19) en série avec le premier groupe (10) et au moins un des autres éléments de stockage d'énergie (20) en série avec le second groupe (13) si la condition de charge n'est pas satisfaite, et pour connecter les autres éléments de stockage d'énergie (19, 20) en parallèle avec les premier et second groupes (10, 13) lorsque la condition de charge est satisfaite, dans lequel les premier et second groupes (10, 13) sont montés en parallèle.

9. Véhicule automobile selon la revendication 8,
**caractérisé en ce que** le véhicule automobile (1) comprend un dispositif de commande (8) qui est conçu pour détecter en tant qu'information de charge une connexion d'un dispositif de connexion de charge (4) du véhicule automobile (1) à la source d'énergie externe au véhicule et en particulier une tension de charge maximale de la source d'énergie externe au véhicule et pour commander le dispositif de commutation (21) en fonction de l'information de charge.
